(19) Europäisches Patentamt

European Patent Office

Office européen des brevets

(11) **EP 1 159 528 B1**

(12) **FASCICULE DE BREVET EUROPEEN**

(45) Date de publication et mention
de la délivrance du brevet:
**18.05.2005  Bulletin 2005/20**

(21) Numéro de dépôt: **00916926.9**

(22) Date de dépôt: **10.03.2000**

(51) Int Cl.$^7$: **F02P 5/15**, F02D 41/24

(86) Numéro de dépôt international:
**PCT/EP2000/002146**

(87) Numéro de publication internationale:
**WO 2000/055499 (21.09.2000 Gazette 2000/38)**

(54) **PROCEDE DE DETERMINATION D'UN PARAMETRE DE FONCTIONNEMENT D'UN MOTEUR**

VERFAHREN ZUR BESTIMMUNG EINES BETRIEBSPARAMETER EINES MOTORS

METHOD FOR DETERMINING A FUNCTIONING PARAMETER OF AN ENGINE

(84) Etats contractants désignés:
**DE ES GB IT**

(30) Priorité:  **12.03.1999  FR 9903086**

(43) Date de publication de la demande:
**05.12.2001   Bulletin 2001/49**

(73) Titulaires:
- **Siemens Automotive S.A.**
  **31036 Toulouse (FR)**
- **Siemens Aktiengesellschaft**
  **80506 München (DE)**

(72) Inventeurs:
- **GALTIER, Frédéric**
  **F-34070 Montpellier (FR)**
- **SCHUERZ, Willibald**
  **D-93188 Pielenhofen (DE)**

(74) Mandataire: **Berg, Peter, Dipl.-Ing. et al**
**European Patent Attorney,**
**Siemens AG,**
**Postfach 22 16 34**
**80506 München (DE)**

(56) Documents cités:
   **EP-A- 0 302 735**          **EP-A- 0 892 161**

## Description

Procédé de détermination d'un paramètre de fonctionnement d'un moteur à combustion interne en fonction de trois paramètres de commande de ce moteur. Plus particulièrement, un tel procédé permet de déterminer l'angle d'avance à l'allumage ($\alpha$) en fonction de la vitesse de rotation du moteur (N), de la charge du moteur (P pression d'admission) et du rapport air/carburant ($\lambda$ lambda).

Dans les moteurs à combustion interne à injection indirecte, il est connu de déterminer l'angle d'avance à l'allumage $\alpha$ en fonction de la vitesse de rotation du moteur N et de la quantité d'air admise P. En effet, pour que ce type de moteur fonctionne correctement, il est impératif que la richesse du mélange R soit à peu près constante et égale à 1. De ce fait, le paramètre $\lambda$ (lambda), qui est l'inverse de cette richesse 1/R, ne varie pas ou très peu, et il n'est pas ou très peu nécessaire d'en tenir compte pour déterminer l'angle d'avance à l'allumage $\alpha$. Ainsi, cet angle d'avance à l'allumage $\alpha$ est déterminé sur banc d'essai pour un moteur type et sa valeur est ensuite appliquée à tous les moteurs de même type à l'aide de cartographies reliant l'angle d'avance à l'allumage $\alpha$, le régime moteur N et la quantité d'air introduite dans le cylindre P.

De telles cartographies sont réalisées couramment et bien qu'elles nécessitent un nombre de points de fonctionnement (N, P) importants, leur établissement et leur utilisation ne présentent pas de réelles difficultés.

Il est connu du document EP 302 735 de calculer deux cartographies de correction (dites cartographies à fort degré et à faible degré) de manière à déterminer l'instant d'allumage dans chaque cylindre du moteur. Le rapport air/carburant est modifié en accord avec au moins l'une des cartographies. Ces cartographies permettent en fait de permuter entre deux indices d'octanes différents. Mais elles ne permettent pas de déterminer un facteur de correction qui serait fonction de cet indice d'octane. En effet dans le cadre de ce document seuls deux indices d'octanes sont nécessaires.

Il est également connu du document EP 892 161 d'utiliser deux cartographies distinctes pour déterminer l'instant d'allumage. La première correspond à un fonctionnement du moteur selon un mode de combustion homogène et la seconde correspond à un fonctionnement en mélange riche (c'est à dire lors du basculement entre le mode stratifié et le mode homogène). Le passage d'une cartographie à l'autre se fait par interpolation linéaire d'un paramètre représentatif du fonctionnement moteur. Malheureusement lorsque le paramètre de fonctionnement moteur ne varie pas de manière linéaire, il est alors impossible d'utiliser ces deux cartographies, car sinon les valeurs calculées pour ce paramètre s'éloignent trop des valeurs réelles.

Dans le cas de moteurs à combustion interne utilisant une injection directe de carburant dans chacun des cylindres et/ou dans ceux utilisant un mélange pauvre (lean bum), de telles cartographies deviennent inutilisables. En effet, de tels moteurs présentent une plage de variations de $\lambda$ (lambda) importantes. De ce fait, l'angle d'avance à l'allumage ne dépend plus uniquement du régime moteur (N) et de sa charge (P), mais il dépend également et fortement de $\lambda$. Or, la mémorisation de tables dans un espace à quatre dimensions ($\alpha$, N, P, $\lambda$) est très difficile à réaliser de manière simple. Les microprocesseurs standards équipant les unités centrales de commande du fonctionnement du moteur ne permettent pas de mémoriser et de traiter de telles cartographies à quatre dimensions. Ces cartographies requièrent, en effet, des ressources mémoires importantes, leur gestion est trop gourmande en calculs et demandent une symbolique particulière pour leur représentation qui n'est pas disponible sur les microprocesseurs classiques.

Le but de la présente invention est donc de représenter de la façon la plus simple possible, la plus précise et la moins coûteuse en temps de calcul, un espace à quatre dimensions. Dans cet espace, trois des axes définissent des paramètres de commande du moteur (par exemple N, P, $\lambda$) et permettent de déterminer une quatrième variable (par exemple $\alpha$) qui est un paramètre de fonctionnement de ce moteur.

Il est déjà connu, à cet effet, de déterminer un facteur de correction additif ou proportionnel en fonction de $\lambda$, établi à partir d'une table unique reliant la correction sur l'avance $\alpha$ et le paramètre $\lambda$ en un point de fonctionnement (N,P). Cependant, ce type de correction ne permet pas de couvrir de grandes plages de variation en $\lambda$, notamment on ne peut à l'aide d'une telle correction définir de facteur de correction valide pour tous les points (N, P) de fonctionnement. De ce fait, l'angle d'avance à l'allumage devient imprécis si $\lambda$ s'éloigne du lambda basique et/ou si on se trouve sur un point de fonctionnement (N, P) très différent de celui où a été défini le facteur de correction.

Il est également connu d'établir deux cartographies donnant l'angle d'avance à l'allumage $\alpha$ en fonction du régime moteur N et de la charge moteur P, une première cartographie correspondant à un $\lambda$ minimum et une seconde cartographie correspondant à un $\lambda$ maximum. En fonction de la valeur réelle de $\lambda$, on bascule de l'une à l'autre de ces cartographies. Cependant, un tel mode de fonctionnement ne présente aucune finesse dans le calcul de l'angle d'avance à l'allumage, il n'y a pas de prise en compte de la valeur actuelle réelle de $\lambda$.

Le but de la présente invention est de déterminer l'angle d'avance à l'allumage $\alpha$ réellement en fonction de N, P et $\lambda$. Plus précisément, la présente invention vise à établir de manière simple et peu coûteuse tant en temps de calculs qu'en mémoire une table à quatre dimensions.

A cet effet, la présente invention concerne un procédé de détermination d'un paramètre de fonctionnement ($\alpha$) d'un moteur à combustion interne en fonction de trois paramètres de commande (N, P, $\lambda$) de ce

moteur, caractérisé en ce qu'il consiste à :

- établir une première cartographie du paramètre de fonctionnement ($\alpha$) en fonction de deux des paramètres de commande (N, P), le troisième paramètre de commande ($\lambda$) étant fixé à une première valeur,
- établir une seconde cartographie du paramètre de fonctionnement ($\alpha$) en fonction des deux mêmes paramètres de commande (N, P), le troisième paramètre de commande ($\lambda$) étant fixé à une seconde valeur,
- établir une relation entre le paramètre de fonctionnement ($\alpha$) et le troisième paramètre ($\lambda$) de commande sur toute la plage de variation de ce paramètre en au moins un point de fonctionnement déterminé (N, P),
- appliquer cette relation pour déterminer le paramètre de fonctionnement ($\alpha$) en fonction des trois paramètres de commande (N, P, $\lambda$) en tous points de fonctionnement du moteur.

Il est à noter que le procédé selon l'invention peut être appliqué à la détermination d'autres paramètres que ceux donnés en exemple, notamment ce procédé permet également le calcul du taux d'EGR (Exhaust Gas Recirculation), taux de recirculation des gaz d'échappement dans lequel quatre paramètres sont à suivre, mais encore la correction d'avance a en fonction du taux d'EGR ou du facteur de VVT (Variable Valve Timing : modification du diagramme d'admission) et de tout autre paramètre de fonctionnement dépendant de plus de deux paramètres de commande.

D'autres objets, caractéristiques et avantages de la présente invention ressortiront d'ailleurs de la description qui suit, à titre d'exemple non limitatif et en référence aux dessins annexés dans lesquels :

- la figure 1 est une vue représentant de manière schématique et simplifiée les quatre paramètres à mémoriser, et
- la figure 2 est une vue schématique illustrant le procédé selon l'invention.

L'invention consiste à mémoriser de la manière la plus simple possible un espace à quatre dimensions. A titre d'exemple, cette mémorisation est appliquée au calcul de l'angle d'avance à l'allumage $\alpha$ pour un moteur à combustion interne.

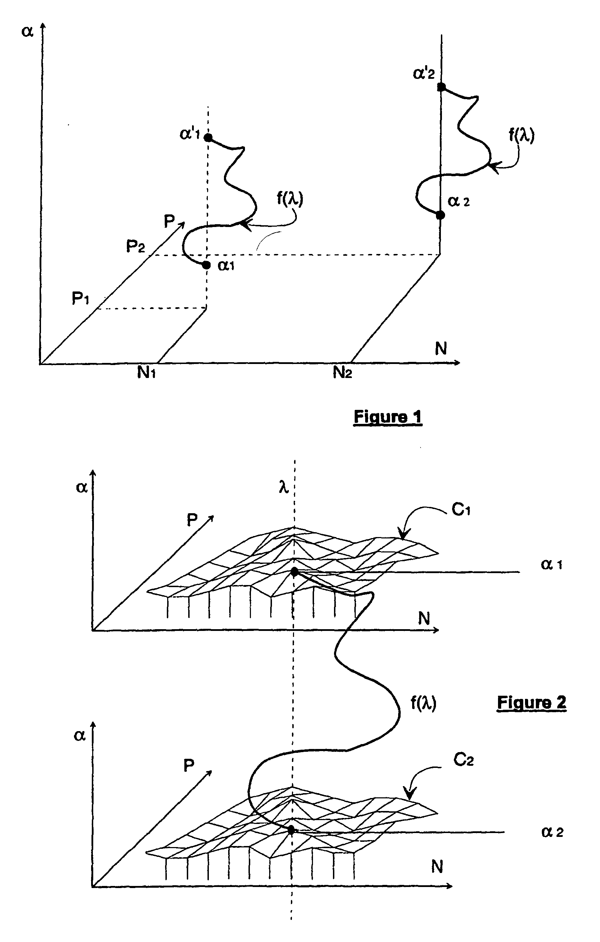

Cet angle d'avance à l'allumage $\alpha$ (figure 1) dépend de manière connue de la vitesse de rotation du moteur N (représentative du régime moteur), de la pression d'admission P (représentative de la quantité d'air introduite dans le cylindre, c'est-à-dire de la charge du moteur) et du rapport air/carburant appelé $\lambda$ (représentatif de la composition du mélange).

Il est déjà connu de réaliser des cartographies reliant le régime moteur N, la charge moteur P et l'angle d'avance à l'allumage $\alpha$. De telles cartographies donnent, pour un couple régime/charge (N, P) donné, l'angle d'avance $\alpha$ à appliquer.

Le procédé de mémorisation d'un espace à quatre dimensions (figure 2) selon l'invention consiste à :

- réaliser une première cartographie C1 reliant P, N et $\alpha$ alors que $\lambda$ est fixé à une première valeur (par exemple mélange pauvre), puis à
- réaliser une seconde cartographie C2 reliant P, N et $\alpha$ alors que $\lambda$ est fixé à une seconde valeur (par exemple mélange riche).

On obtient ainsi deux cartographies C1 et C2, chacune établie pour un $\lambda$ déterminé.

Selon l'invention, on se place en au moins un point de fonctionnement (P1, N1) (figure 1) donné pour un moteur type placé sur un banc d'essai et on détermine l'angle d'avance à l'allumage $\alpha$ pour chaque valeur de $\lambda$. On établit ainsi une relation f ($\lambda$) entre le paramètre de fonctionnement ($\alpha$) et le troisième paramètre de commande ($\lambda$) sur toute la plage de variation de ce paramètre en au moins un point de fonctionnement déterminé (N1, P1).

Pour plus de précision dans la détermination de la relation reliant l'angle d'avance $\alpha$ à l'allumage et $\lambda$, il est possible d'établir cette courbe en plusieurs points de fonctionnement distincts, par exemple au point (P2, N2) (figure 1).

La relation reliant $\alpha$ et $\lambda$ est une relation non linéaire, à titre d'exemple elle a été représentée sous la forme d'un trait gras aux figures 1 et 2. Bien entendu, la représentation graphique de cette fonction n'est pas limitée à la forme représentée.

Selon l'invention, lorsque l'on est en un point de fonctionnement quelconque (P, N), la détermination du paramètre de fonctionnement (angle d'avance à l'allumage $\alpha$) en fonction des trois paramètres de commande N, P et $\lambda$ est effectuée selon la formule suivante :

$$\alpha = \alpha1 + [\alpha2 - \alpha1] \times f(\lambda)$$

dans laquelle :

- $\alpha1$ est la valeur du paramètre de fonctionnement (angle d'avance à l'allumage) donné par la première cartographie C1 pour un couple de paramètres de commande (N, P),
- $\alpha2$ est la valeur du paramètre de fonctionnement (angle d'avance à l'allumage) donné par la seconde cartographie C2 pour ce même couple de paramètres de commande (N, P), et
- f($\lambda$) est la relation non linéaire reliant le paramètre de fonctionnement (angle d'avance à l'allumage $\alpha$) et le troisième paramètre de commande $\lambda$.

Ainsi, le procédé selon la présente invention présente l'avantage de ne nécessiter que deux cartographies (N, P, $\alpha$). Dès que la relation $\alpha = f(\lambda)$ est déterminée en au moins un point de fonctionnement, elle est applicable en tous points et permet de relier facilement les trois paramètres de commandes au paramètre de fonctionnement $\alpha$. Cette relation $\alpha = f(\lambda)$ peut elle aussi être représentée par une simple cartographie mono-dimensionelle.

En fait, selon l'invention, le facteur d'interpolation entre les deux cartographies est une fonction non linéaire déterminée au banc d'essai. Cette fonction peut être cartographiée.

Ainsi, la représentation d'un espace à quatre dimensions peut être effectuée de manière rapide et peu gourmande en calcul en remplaçant une table définissant un paramètre de fonctionnement $\alpha$ en fonction de trois paramètres de commande (N, P, $\lambda$) que l'on sait non gérable, par deux tables fonction des paramètres de commande (N, P) plus une interpolation ou extrapolation non linéaire entre ces deux tables en fonction d'une représentation adimensionnelle f($\lambda$) du troisième paramètre de commande $\lambda$.

L'inter/extrapolation entre les deux tables (cartographies) n'est pas faite linéairement, car cela ne donnerait pas accès au troisième degré de liberté. Cette inter/extrapolation est réalisée selon une loi particulière définie en fonction du troisième paramètre $\lambda$. L'invention permet ainsi de retrouver tous les degrés de liberté nécessaires à l'exploitation complète de cet espace à quatre dimensions.

On notera que pour déterminer la relation non linéaire, on peut soit se fonder sur un point de fonctionnement donné et favorable puis inter/extrapoler cette relation à tous les points, soit rechercher la loi optimale à partir de plusieurs points de fonctionnement distincts.

On notera (si l'on connaît les valeurs de $\lambda$ requises en quelques points de fonctionnement (N,P) prédéfinis et cartographiés) qu'il est également possible d'encadrer la valeur réelle de N et de P par les valeurs approchantes de chacune des cartographies pour donner par extra/interpolation une valeur de ($\lambda$) extrapolée puis d'obtenir, au moyen de la relation non linéaire, la valeur de ($\alpha$) correspondante.

Cette variante permet, comme dans le cadre du premier mode de mise en oeuvre, d'explorer toute la gamme de variations en $\lambda$. Les résultats obtenus sont plus précis et plus fiables qu'un simple facteur de correction. Cette variante est plus robuste face aux lois de variations du paramètre de fonctionnement en fonction des paramètres de commande.

On notera que cette variante permet de représenter parfaitement les deux types de corrections connues dont on a déjà parlé, à savoir la simple correction additive ou proportionnelle tout comme le basculement simple et binaire d'une table à l'autre. Il suffit pour cela de choisir judicieusement la loi $\alpha = f(\lambda)$.

On notera que si les deux cartographies C1 et C2 existent déjà, on peut les reprendre sans avoir à recommencer toute la calibration. Il suffit de définir la relation permettant de passer de l'une à l'autre.

Si la plage de variation en $\lambda$ change au cours du développement du projet de mise au point d'un moteur type, il suffit de changer la gamme de variation de $\lambda$ sans avoir à recommencer toute la calibration déjà faite.

Bien entendu, la présente invention n'est pas limitée au mode de réalisation ci-dessus décrit et englobe toute variante à la portée de l'homme de l'art. Notamment, le procédé selon l'invention peut être appliqué partout où une mémorisation d'un espace à quatre dimensions est nécessaire. Ainsi, le procédé selon l'invention peut être appliqué au calcul du taux d'EGR (Exhaust Gas Recirculation - Taux de Recirculation des Gaz d'Echappement) et notamment à la correction de l'avance à l'allumage à appliquer en fonction de ce taux ou en fonction de la VVT, etc....

De même, les cartographies C1 et C2 ne sont pas forcément réalisées en fixant $\lambda$ au minimum ou au maximum (mélange riche ou mélange pauvre). Ces deux cartographies peuvent être réalisées pour deux valeurs de $\lambda$ quelconques mais distinctes.

## Revendications

1. Procédé de détermination d'un paramètre de fonctionnement ($\alpha$) d'un moteur à combustion interne en fonction de trois paramètres de commande (N, P, $\lambda$) de ce moteur, le dit procédé consistant à :

   - établir une première cartographie (C1) du paramètre de fonctionnement ($\alpha$) en fonction de deux des paramètres de commande (N, P), le troisième paramètre de commande ($\lambda$) étant fixé à une première valeur et,
   - établir une seconde cartographie (C2) du paramètre de fonctionnement ($\alpha$) en fonction des deux mêmes paramètres de commande (N, P), le troisième paramètre de commande ($\lambda$) étant fixé à une seconde valeur,

   le dit procédé étant **caractérisé en ce qu'**il consiste en outre à :

   - établir au banc d'essai une relation f($\lambda$) non linéaire entre le paramètre de fonctionnement ($\alpha$) et le troisième paramètre ($\lambda$) de commande sur toute la plage de variation de ce paramètre en au moins un point de fonctionnement déterminé (N, P) et,
   - appliquer cette relation pour déterminer le paramètre de fonctionnement ($\alpha$) en fonction des trois paramètres de commande (N, P, $\lambda$) en tous points de fonctionnement du moteur.

2. Procédé selon la revendication 1, **caractérisé en**

**ce que** le paramètre de fonctionnement ($\alpha$) est déterminé selon la relation suivante :

$$\alpha = \alpha 1 + [\alpha 2 - \alpha 1] \times f(\lambda)$$

dans laquelle :

- $\alpha 1$ est la valeur du paramètre de fonctionnement donné par la première cartographie (C1) pour un couple de paramètres de commande (N, P),
- $\alpha 2$ est la valeur du paramètre de fonctionnement donné par la seconde cartographie (C2) pour ce même couple de paramètres de commande (N, P), et
- $f(\lambda)$ est la relation non linéaire reliant le paramètre de fonctionnement $\alpha$ et le troisième paramètre de commande $\lambda$.

3. Procédé selon la revendication 2, **caractérisé en ce que** la détermination de la fonction non linéaire reliant le paramètre de fonctionnement ($\alpha$) et le troisième paramètre de commande ($\lambda$) est effectuée en au moins deux points de fonctionnement distincts pour lesquels les deux paramètres de commande sont fixés (N, P).

4. Procédé selon la revendication 1, **caractérisé en ce que** la valeur réelle de N et de P est encadrée par les valeurs approchantes de chacune des cartographies (C1, C2) pour donner par extra/interpolation une valeur de ($\lambda$) extrapolée permettant d'obtenir, au moyen de la relation non linéaire, la valeur de ($\alpha$) correspondante.

5. Procédé selon l'une quelconque des revendications précédentes, **caractérisé en ce que** le paramètre de fonctionnement est l'angle d'avance à l'allumage ($\alpha$), et les trois paramètres de commandes sont :

- un paramètre représentatif du régime moteur (N),
- un paramètre représentatif de la charge du moteur (P) et,
- un paramètre représentatif de la composition du mélange ($\lambda$),

la première et la seconde cartographie (C1, C2) donnant l'angle d'avance à l'allumage ($\alpha$) en fonction du régime (N) et de la charge (P).

**Patentansprüche**

1. Verfahren zur Bestimmung eines Betriebsparameters ($\alpha$) eines Verbrennungsmotors in Abhängigkeit von drei Steuerparametern (N, P, $\lambda$), wobei das Verfahren folgende Schritte umfasst:

- Erstellen eines ersten Kennfelds (C1) des Betriebsparameters ($\alpha$) in Abhängigkeit von zwei dieser Steuerparameter (N, P), wobei der dritte Steuerparameter ($\lambda$) auf einen ersten Wert festgelegt ist, und

- Erstellen eines zweiten Kennfelds des Betriebsparameters ($\alpha$) in Abhängigkeit von den gleichen beiden Steuerparametern (N, P), wobei der dritte Steuerparameter ($\lambda$) auf einen zweiten Wert festgelegt ist,

wobei das Verfahren **dadurch gekennzeichnet ist, dass** es darüber hinaus folgende Schritte umfasst:

- Ermitteln einer nicht-linearen Beziehung f ($\lambda$) zwischen dem Betriebsparameter ($\alpha$) und dem dritten Steuerparameter ($\lambda$) über den gesamten Variationsbereich dieses Parameters hinweg an mindestens einem bestimmten Betriebspunkt (N, P) auf dem Prüfstand und

- Anwenden dieser Beziehung, um den Betriebsparameter ($\alpha$) in Abhängigkeit von den drei Steuerparametern (N, P, $\lambda$) an allen Betriebspunkten des Motors zu bestimmen.

2. Verfahren nach Anspruch 1, **dadurch gekennzeichnet, dass** der Betriebsparameter ($\alpha$) entsprechend folgender Gleichung bestimmt wird:

$$\alpha = \alpha 1 + [\alpha 2 - \alpha] \times f(\lambda)$$

wobei:

- $\alpha 1$ der Wert des Betriebsparameters ist, der vom ersten Kennfeld (C1) für ein Steuerparameterpaar (N, P) vorgegeben wurde,

- $\alpha 2$ der Wert des Betriebsparameters ist, der vom zweiten Kennfeld (C2) für das gleiche Steuerparameterpaar (N, P) vorgegeben wurde, und

- f ($\lambda$) die nicht-lineare Beziehung zwischen dem Betriebsparameter $\alpha$ und dem dritten Steuerparameter $\lambda$ ist.

3. Verfahren nach Anspruch 2, **dadurch gekennzeichnet, dass** die Bestimmung der nicht-linearen Funktion, die den Betriebsparameter ($\alpha$) und den dritten Steuerparameter ($\lambda$) miteinander in Beziehung setzt, an mindestens zwei verschiedenen Betriebspunkten erfolgt, für die die beiden Steuerparameter festgelegt sind (N, P).

**4.** Verfahren nach Anspruch 1, **dadurch gekennzeichnet, dass** sich dem Ist-Wert von N und P durch Näherungswerte in jedem Kennfeld (C1, C2) angenähert wird, um durch Extra-/Interpolation einen extrapolierten Wert von ($\lambda$) zu ermitteln und anschließend mithilfe der nicht-linearen Beziehung den entsprechenden Wert von ($\alpha$) zu erhalten.

**5.** Verfahren nach einem der vorhergehenden Ansprüche, **dadurch gekennzeichnet, dass** der Betriebsparameter der Zündwinkel ($\alpha$) ist und die drei Steuerparameter folgende sind:

- ein Parameter, der die Motordrehzahl (N) darstellt,

- ein Parameter, der die Motorlast (P) darstellt, und

- ein Parameter, der die Gemischzusammensetzung ($\lambda$) darstellt,

wobei das erste und das zweite Kennfeld (C1, C2) den Zündwinkel ($\alpha$) in Abhängigkeit von der Motordrehzahl (N) und der Last (P) angeben.

## Claims

**1.** Method for determining an operating parameter ($\alpha$) of an internal combustion engine as a function of three control parameters (N, P, $\lambda$) of that engine, said method comprising:

- creating a first map (C1) of the operating parameter ($\alpha$) as a function of two of the control parameters (N, P), the third control parameter ($\lambda$) being fixed at a first value, and
- creating a second map (C2) of the operating parameter ($\alpha$) as a function of the same two control parameters (N, P), the third control parameter ($\lambda$) being fixed at a second value, said method being **characterised in that** it comprises furthermore:

  - creating on the test bench a non-linear relationship f($\lambda$) between the operating parameter ($\alpha$) and the third control parameter ($\lambda$) over the entire range of variation of that parameter at a minimum of one defined operating point (N, P), and
  - applying this relationship for the purposes of determining the operating parameter ($\alpha$) as a function of the three control parameters (N, P, $\lambda$) at all the operating points of the engine.

**2.** Method according to Claim 1, **characterised in that**

the operating parameter ($\alpha$) is determined according to the following relationship:

$$\alpha = \alpha 1 + [\alpha 2 - \alpha 1] \times f(\lambda)$$

where:

- $\alpha 1$ is the value of the operating parameter given by the first map (C1) for a pair of control parameters (N, P),
- $\alpha 2$ is the value of the operating parameter given by the second map (C2) for that same pair of control parameters (N, P), and
- f($\lambda$) is the non-linear relationship linking the operating parameter $\alpha$ and the third control parameter $\lambda$.

**3.** Method according to Claim 2, **characterised in that** the determination of the non-linear function linking the operating parameter ($\alpha$) and the third control parameter ($\lambda$) is carried out at a minimum of two separate operating points for which the two control parameters are fixed (N, P).

**4.** Method according to Claim 1, **characterised in that** the real value of N and P is framed by the approaching values of each of the maps (C1, C2) for the purposes of giving, by extrapolation/interpolation, an extrapolated value of ($\lambda$) allowing the corresponding value of ($\alpha$) to be obtained by means of the non-linear relationship.

**5.** Method according to any of the preceding claims, **characterised in that** the operating parameter is the ignition advance angle ($\alpha$) and the three control parameters are:

- a parameter representing the engine speed (N),
- a parameter representing the load of the engine (P), and
- a parameter representing the composition of the mixture ($\lambda$),

the first and the second map (C1, C2) giving the ignition advance angle ($\alpha$) as a function of the speed (N) and the load (P).

**Figure 1**

**Figure 2**